# EUROPEAN PATENT SPECIFICATION

(11) **EP 3 550 400 B1**
(45) Date of publication and mention of the grant of the patent: **17.01.2024**
(21) Application number: 18748185.8
(22) Date of filing: 31.01.2018
(51) Int. Cl.: G06F 1/32, G06F 3/041, G06F 1/3203, G06F 1/3231, G06F 1/3234, G06F 21/32, H04L 9/40, G06V 40/13, G06V 40/12

(54) **ELECTRONIC DEVICE AND FINGERPRINT RECOGNITION METHOD OF ELECTRONIC DEVICE**
ELEKTRONISCHE VORRICHTUNG UND FINGERABDRUCKERKENNUNGSVERFAHREN EINER ELEKTRONISCHEN VORRICHTUNG
DISPOSITIF ÉLECTRONIQUE ET PROCÉDÉ DE RECONNAISSANCE D'EMPREINTE DIGITALE DU DISPOSITIF ÉLECTRONIQUE

(30) Priority: 31.01.2017 KR 20170013743
(43) Date of publication of application: 09.10.2019
(73) Proprietor: Samsung Electronics Co., Ltd., Suwon-si, Gyeonggi-do 16677 (KR)
(72) Inventor: CHOI, Jung Hoon, Suwon-si Gyeonggi-do 16550 (KR); KIM, Chang Jin, Yongin-si Gyeonggi-do 17010 (KR); KIM, Man Sung, Suwon-si Gyeonggi-do 16676 (KR)
(74) Representative: HGF
(86) International application number: PCT/KR2018/001351
(87) International publication number: WO 2018/143673

(56) References cited:
- WO-A1-2016/205832
- JP-A- 2009 540 375
- KR-A- 20050 018 101
- KR-A- 20160 090 313
- KR-A- 20160 096 390
- US-A1- 2011 219 382
- US-A1- 2016 117 023
- US-A1- 2017 024 597

## Description

### [Technical Field]

Embodiments disclosed herein relate to technology for recognizing a fingerprint in an electronic device.

### [Background Art]

With the development of techniques for recognizing biometric information, electronic devices including biometric sensors such as fingerprint sensors or iris sensors are widely used. The electronic device may recognize or store biometric information of a user by using the biometric sensor described above. The biometric information stored in the electronic device may be used in unlocking of the electronic device or financial transaction.

The electronic device may obtain the fingerprint of the user using the fingerprint sensor. The electronic device may set a feature where a ridge of the fingerprint is bifurcated or broken as a minutiae feature, and identify the distribution and the number of the minutiae features by analyzing the fingerprint. The electronic device may verify the user of the electronic device by comparing the distribution and the number of previously-stored minutiae features with the distribution and number of minutiae features recognized by the fingerprint sensor. The electronic device may obtain a fingerprint image and authenticate the user of the electronic device by comparing the obtained fingerprint image with a previously-stored fingerprint image.

US 2017/024597A1 relates to an electronic device having a fingerprint verification function for unlocking an electronic device. WO 2016/205832A1 relates to a device including a touch screen and an optical sensor module located below the touch screen to provide optical fingerprint sensing.

### [Disclosure]

### [Technical Problem]

When waking up or unlocking an electronic device by fingerprint verification, a fingerprint sensor included in the electronic device may need to be in an awake state even when the electronic device is in a slept state. In this case, unnecessary power may be consumed due to driving of the fingerprint sensor, and the performance of the electronic device may be deteriorated. In addition, when the fingerprint sensor is an optical fingerprint sensor, unnecessary power consumption may increase because the display needs to operate to supply a light source for operation of the fingerprint sensor. Further, even when another object containing no fingerprint is brought into contact with a fingerprint sensor, a processor included in the electronic device is required to perform comparison operation, thus causing a further increase in unnecessary power consumption.

Embodiments disclosed herein provide an electronic device and a method capable of reducing power consumption for fingerprint recognition while the electronic device is in a sleep state to solve the above-mentioned problems and problems raised in the disclosure.

### [Technical Solution]

An electronic device according to an embodiment disclosed therein may include a display including a touch sensor, a fingerprint sensor formed in at least a partial area of the display, a processor and a control circuit that controls the touch sensor, and the control circuit may detect an input related to an external object through the at least a partial area while the processor is in a low power state, determine whether the external object is an input related to the fingerprint sensor, when the external object is not an input related to the fingerprint sensor, discard the input of the external object, and when the external object is an input related to the fingerprint sensor, emit light through a display area at least including the at least partial area in the low power state.

In addition, an electronic device according to an embodiment disclosed therein may include a touch sensor that detects proximity of an external object, a touch IC electrically connected to the touch sensor, a display panel that emits light, a display circuit electrically connected to the touch IC and the display panel to drive the display panel, a fingerprint sensor electrically connected to the touch IC to detect a pattern of the external object using light emitted from the display panel, and a processor electrically connected to the touch IC, the display circuit and the fingerprint sensor, wherein the touch IC may control the display circuit such that at least a partial area of the display panel emits light when a touch event by the external object is detected within a specified area of the touch sensor while the processor is in a sleep state, the touch IC or the fingerprint sensor may wake up the processor when a pattern of the external object corresponds to a fingerprint.

In addition, a method according to an embodiment disclosed therein may include detecting a touch event by an external object in a specified area of a touch sensor while an application processor is in a sleep state, allowing at least a partial area of a display panel to emit light to recognize a pattern of the external object, determining whether the pattern of the external object corresponds to a fingerprint using a fingerprint sensor and waking up the application processor when the pattern of the external object corresponds to a fingerprint.

### [Advantageous Effects]

According to the embodiments disclosed in the disclosure, it is possible to filter out an event not related to fingerprint recognition using the touch IC and/or the fingerprint sensor, when a touch event is detected while the processor is in the sleep state.

In addition, various effects may be provided that are directly or indirectly understood through the disclosure.

### [Description of Drawings]

FIG. 1 illustrates an electronic device in a network environment, according to various embodiments.
FIG. 2 illustrates a block diagram of an electronic device according to various embodiments.
FIG. 3 illustrates a block diagram of a program module according to various embodiments.
FIG. 4 is a front view of an electronic device according to an embodiment.
FIG. 5 is a cross-sectional view of an electronic device according to an embodiment.
FIG. 6 is a block diagram illustrating a configuration of an electronic device according to an embodiment.
FIG. 7 is a block diagram illustrating a configuration of an electronic device according to an embodiment.
FIG. 8 is a block diagram illustrating a configuration of an electronic device according to an embodiment.
FIG. 9 illustrates an exemplary operation of an electronic device, according to an embodiment.
FIG. 10 illustrates an exemplary operation of an electronic device, according to an embodiment.
FIG. 11 is a flowchart for describing a method for recognizing a fingerprint in an electronic device according to an embodiment.
FIG. 12 is a flowchart for describing a method for recognizing a fingerprint in an electronic device according to an embodiment.

### [Mode for Invention]

Hereinafter, various embodiments of the disclosure may be described with reference to accompanying drawings. Accordingly, those of ordinary skill in the art will recognize that modification, equivalent, and/or alternative on the various embodiments described herein can be variously made without departing from the scope of the disclosure. With regard to description of drawings, similar components may be marked by similar reference numerals. The terms of a singular form may include plural forms unless otherwise specified. In this disclosure, the expressions "A or B", "at least one of A or/and B", or "one or more of A or/and B", and the like may include any and all combinations of one or more of the associated listed items. The terms, such as "first", "second", and the like may be used to refer to various components regardless of the order and/or the priority and to distinguish the relevant components from other components, but do not limit the components. When an component (e.g., a first component) is referred to as being "(operatively or communicatively) coupled with/to" or "connected to" another component (e.g., a second component), the component may be directly coupled with/to or connected to the other component or an intervening component (e.g., a third component) may be present.

According to the situation, the expression "configured to" used in this disclosure may be used as, for example, the expression "suitable for", "having the capacity to", "adapted to", "made to", "capable of", or "designed to" in hardware or software. The expression "a device configured to" may mean that the device is "capable of" operating together with another device or other parts. For example, a "processor configured to (or set to) perform A, B, and C" may mean a dedicated processor (e.g., an embedded processor) for performing a corresponding operation or a generic-purpose processor (e.g., a central processing unit (CPU) or an application processor) which performs corresponding operations by executing one or more software programs which are stored in a memory device.

An electronic device according to various embodiments of this disclosure may include at least one of, for example, smartphones, tablet personal computers (PCs), mobile phones, video telephones, electronic book readers, desktop PCs, laptop PCs, netbook computers, workstations, servers, personal digital assistants (PDAs), portable multimedia players (PMPs), Motion Picture Experts Group (MPEG-1 or MPEG-2) Audio Layer 3 (MP3) players, medical devices, cameras, or wearable devices. According to various embodiments, the wearable device may include at least one of an accessory type (e.g., watches, rings, bracelets, anklets, necklaces, glasses, contact lens, or head-mounted-devices (HMDs), a fabric or garment-integrated type (e.g., an electronic apparel), a body-attached type (e.g., a skin pad or tattoos), or a bio-implantable type (e.g., an implantable circuit). According to various embodiments, the electronic device may include at least one of, for example, televisions (TVs), digital versatile disc (DVD) players, audios, refrigerators, air conditioners, cleaners, ovens, microwave ovens, washing machines, air cleaners, set-top boxes, home automation control panels, security control panels, media boxes (e.g., Samsung HomeSync^{™}, Apple TV^{™}, or Google TV^{™}), game consoles (e.g., Xbox^{™} or PlayStation^{™}), electronic dictionaries, electronic keys, camcorders, electronic picture frames, and the like.

According to another embodiment, an electronic device may include at least one of various medical devices (e.g., various portable medical measurement devices (e.g., a blood glucose monitoring device, a heartbeat measuring device, a blood pressure measuring device, a body temperature measuring device, and the like), a magnetic resonance angiography (MRA), a magnetic resonance imaging (MRI), a computed tomography (CT), scanners, and ultrasonic devices), navigation devices, Global Navigation Satellite System (GNSS), event data recorders (EDRs), flight data recorders (FDRs), vehicle infotainment devices, electronic equipment for vessels (e.g., navigation systems and gyrocompasses), avionics, security devices, head units for vehicles, industrial or home robots, drones, automatic teller's machines (ATMs), points of sales (POSs) of stores, or internet of things (e.g., light bulbs, various sensors, sprinkler devices, fire alarms, thermostats, street lamps, toasters, exercise equipment, hot water tanks, heaters, boilers, and the like). According to an embodiment, the electronic device may include at least one of parts of furniture or buildings/structures, electronic boards, electronic signature receiving devices, projectors, or various measuring instruments (e.g., water meters, electricity meters, gas meters, or wave meters, and the like). According to various embodiments, the electronic device may be a flexible electronic device or a combination of two or more above-described devices. Furthermore, an electronic device according to an embodiment of this disclosure may not be limited to the above-described electronic devices. In this disclosure, the term "user" may refer to a person who uses an electronic device or may refer to a device (e.g., an artificial intelligence electronic device) that uses the electronic device.

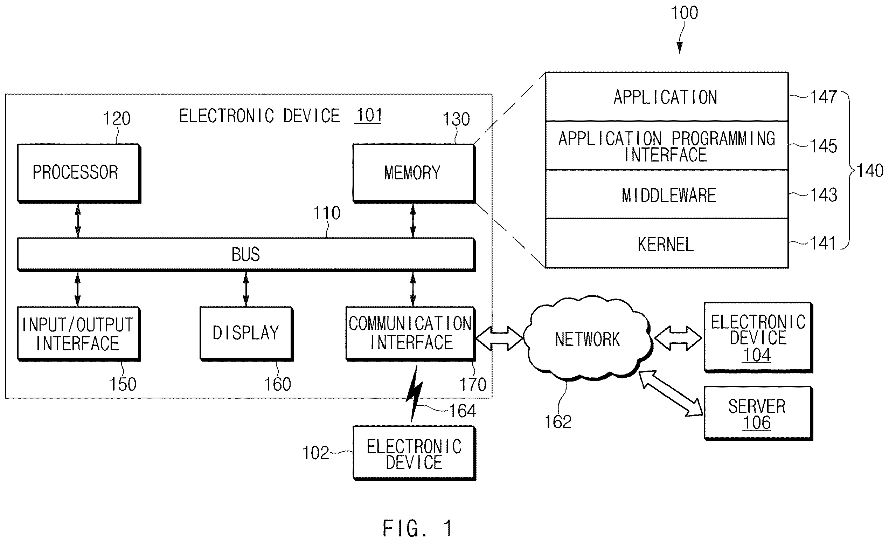

FIG. 1 illustrates an electronic device 101 in a network environment 100 according to various embodiments. Referring to FIG. 1, the electronic device 101 may include a bus 110, a processor 120, a memory 130, an input/output interface 150, a display 160, and a communication interface 170. According to an embodiment, the electronic device 101 may not include at least one of the above-described components or may further include other component(s). The bus 110 may interconnect the above-described components 110 to 170 and may include a circuit for conveying communications (e.g., a control message and/or data) among the above-described components. The processor 120 may include one or more of a central processing unit (CPU), an application processor (AP), or a communication processor (CP). For example, the processor 120 may perform an arithmetic operation or data processing associated with control and/or communication of at least other components of the electronic device 101.

The memory 130 may include a volatile and/or nonvolatile memory. For example, the memory 130 may store instructions or data associated with at least one other component(s) of the electronic device 101. According to an embodiment, the memory 130 may store software and/or a program 140. The program 140 may include, for example, a kernel 141, a middleware 143, an application programming interface (API) 145, and/or an application program (or "an application") 147. At least a part of the kernel 141, the middleware 143, or the API 145 may be referred to as an "operating system (OS)". For example, the kernel 141 may control or manage system resources (e.g., the bus 110, the processor 120, the memory 130, and the like) that are used to execute operations or functions of other programs (e.g., the middleware 143, the API 145, and the application program 147). Furthermore, the kernel 141 may provide an interface that allows the middleware 143, the API 145, or the application program 147 to access discrete components of the electronic device 101 so as to control or manage system resources.

The middleware 143 may perform, for example, a mediation role such that the API 145 or the application program 147 communicates with the kernel 141 to exchange data. Furthermore, the middleware 143 may process one or more task requests received from the application program 147 according to a priority. For example, the middleware 143 may assign the priority, which makes it possible to use a system resource (e.g., the bus 110, the processor 120, the memory 130, or the like) of the electronic device 101, to at least one of the application program 147 and may process the one or more task requests. The API 145 may be an interface through which the application program 147 controls a function provided by the kernel 141 or the middleware 143, and may include, for example, at least one interface or function (e.g., an instruction) for a file control, a window control, image processing, a character control, or the like. The input/output interface 150 may transmit an instruction or data input from a user or another external device, to other component(s) of the electronic device 101 or may output an instruction or data, received from other component(s) of the electronic device 101, to a user or another external device.

The display 160 may include, for example, a liquid crystal display (LCD), a light-emitting diode (LED) display, an organic LED (OLED) display, a microelectromechanical systems (MEMS) display, or an electronic paper display. The display 160 may display, for example, various contents (e.g., a text, an image, a video, an icon, a symbol, and the like) to a user. The display 160 may include a touch screen and may receive, for example, a touch, gesture, proximity, or hovering input using an electronic pen or a part of a user's body. For example, the communication interface 170 may establish communication between the electronic device 101 and an external device (e.g., the first electronic device 102, the second electronic device 104, or the server 106). For example, the communication interface 170 may be connected to the network 162 over wireless communication or wired communication to communicate with the external device (e.g., the second electronic device 104 or the server 106).

For example, the wireless communication may include cellular communication using at least one of long-term evolution (LTE), LTE Advanced (LTE-A), Code Division Multiple Access (CDMA), Wideband CDMA (WCDMA), Universal Mobile Telecommunications System (UMTS), Wireless Broadband (WiBro), Global System for Mobile Communications (GSM), or the like. The wireless communication may include at least one of wireless fidelity (Wi-Fi), Bluetooth, Bluetooth low energy (BLE), Zigbee, near field communication (NFC), magnetic stripe transmission (MST), radio frequency (RF), a body area network, or the like. According to an embodiment, the wireless communication may include GNSS. The GNSS may be one of, for example, a global positioning system (GPS), a global navigation satellite system (Glonass), a Beidou navigation satellite system (hereinafter referred to as "Beidou"), or an European global satellite-based navigation system (hereinafter referred to as "Galileo"). Hereinafter, in this disclosure, "GPS" and "GNSS" may be interchangeably used. The wired communication may include at least one of, for example, a universal serial bus (USB), a high definition multimedia interface (HDMI), a recommended standard-232 (RS-232), powerline communication, a plain old telephone service (POTS), or the like. The network 162 may include at least one of telecommunications networks, for example, a computer network (e.g., LAN or WAN), an Internet, or a telephone network.

Each of the first and second external electronic devices 102 and 104 may be a device of which the type is different from or the same as that of the electronic device 101. According to various embodiments, all or a portion of operations that the electronic device 101 will perform may be executed by another or plural electronic devices (e.g., the electronic device 102 or 104 or the server 106). According to an embodiment, in the case where the electronic device 101 executes any function or service automatically or in response to a request, the electronic device 101 may not perform the function or the service internally, but, alternatively additionally, it may request at least a portion of a function associated with the electronic device 101 at other electronic device (e.g., the electronic device 102 or 104 or the server 106). The other electronic device (e.g., the electronic device 102 or 104 or the server 106) may execute the requested function or additional function and may transmit the execution result to the electronic device 101. The electronic device 101 may provide the requested function or service using the received result or may additionally process the received result to provide the requested function or service. To this end, for example, cloud computing, distributed computing, or client-server computing may be used.

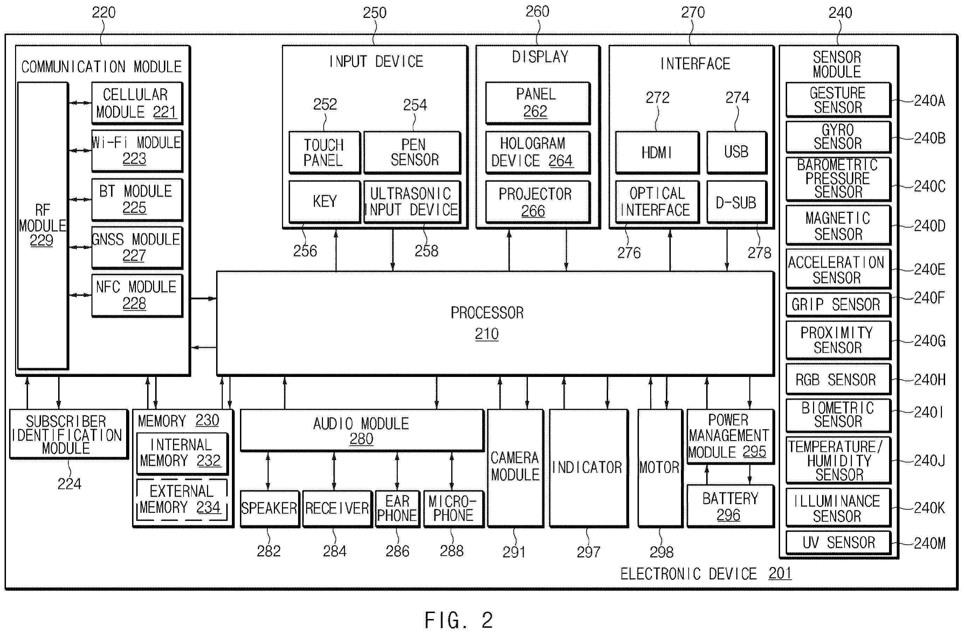

FIG. 2 illustrates a block diagram of an electronic device 201, according to various embodiments. An electronic device 201 may include, for example, all or a part of the electronic device 101 illustrated in FIG. 1. The electronic device 201 may include one or more processors (e.g., an application processor (AP)) 210, a communication module 220, a subscriber identification module 224, a memory 230, a sensor module 240, an input device 250, a display 260, an interface 270, an audio module 280, a camera module 291, a power management module 295, a battery 296, an indicator 297, and a motor 298. The processor 210 may drive, for example, an operating system (OS) or an application to control a plurality of hardware or software components connected to the processor 210 and may process and compute a variety of data. For example, the processor 210 may be implemented with a System on Chip (SoC). According to an embodiment, the processor 210 may further include a graphic processing unit (GPU) and/or an image signal processor. The processor 210 may include at least a part (e.g., a cellular module 221) of components illustrated in FIG. 2. The processor 210 may load a command or data, which is received from at least one of other components (e.g., a nonvolatile memory), into a volatile memory and process the loaded instruction or data. The processor 210 may store result data in the nonvolatile memory.

The communication module 220 may be configured the same as or similar to the communication interface 170 of FIG. 1. The communication module 220 may include the cellular module 221, a Wi-Fi module 223, a Bluetooth (BT) module 225, a GNSS module 227, a near field communication (NFC) module 228, and a radio frequency (RF) module 229. The cellular module 221 may provide, for example, voice communication, video communication, a character service, an Internet service, or the like over a communication network. According to an embodiment, the cellular module 221 may perform discrimination and authentication of the electronic device 201 within a communication network by using the subscriber identification module (e.g., a SIM card) 224. According to an embodiment, the cellular module 221 may perform at least a portion of functions that the processor 210 provides. According to an embodiment, the cellular module 221 may include a communication processor (CP). According to an embodiment, at least a part (e.g., two or more) of the cellular module 221, the Wi-Fi module 223, the BT module 225, the GNSS module 227, or the NFC module 228 may be included within one Integrated Circuit (IC) or an IC package. For example, the RF module 229 may transmit and receive a communication signal (e.g., an RF signal). For example, the RF module 229 may include a transceiver, a power amplifier module (PAM), a frequency filter, a low noise amplifier (LNA), an antenna, or the like. According to another embodiment, at least one of the cellular module 221, the Wi-Fi module 223, the BT module 225, the GNSS module 227, or the NFC module 228 may transmit and receive an RF signal through a separate RF module. The subscriber identification module 224 may include, for example, a card and/or embedded SIM that includes a subscriber identification module and may include unique identify information (e.g., integrated circuit card identifier (ICCID)) or subscriber information (e.g., international mobile subscriber identity (IMSI)).

The memory 230 (e.g., the memory 130) may include an internal memory 232 or an external memory 234. For example, the internal memory 232 may include at least one of a volatile memory (e.g., a dynamic random access memory (DRAM), a static RAM (SRAM), a synchronous DRAM (SDRAM), or the like), a nonvolatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory, a hard drive, or a solid state drive (SSD). The external memory 234 may include a flash drive such as compact flash (CF), secure digital (SD), micro secure digital (Micro-SD), mini secure digital (Mini-SD), extreme digital (xD), a multimedia card (MMC), a memory stick, or the like. The external memory 234 may be operatively and/or physically connected to the electronic device 201 through various interfaces.

The sensor module 240 may measure, for example, a physical quantity or may detect an operation state of the electronic device 201. The sensor module 240 may convert the measured or detected information to an electric signal. For example, the sensor module 240 may include at least one of a gesture sensor 240A, a gyro sensor 240B, a barometric pressure sensor 240C, a magnetic sensor 240D, an acceleration sensor 240E, a grip sensor 240F, the proximity sensor 240G, a color sensor 240H (e.g., red, green, blue (RGB) sensor), a biometric sensor 2401, a temperature/humidity sensor 240J, an illuminance sensor 240K, or an UV sensor 240M. Although not illustrated, additionally or alternatively, the sensor module 240 may further include, for example, an E-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 240 may further include a control circuit for controlling at least one or more sensors included therein. According to an embodiment, the electronic device 201 may further include a processor that is a part of the processor 210 or independent of the processor 210 and is configured to control the sensor module 240. The processor may control the sensor module 240 while the processor 210 remains at a sleep state.

The input device 250 may include, for example, a touch panel 252, a (digital) pen sensor 254, a key 256, or an ultrasonic input unit 258. For example, the touch panel 252 may use at least one of capacitive, resistive, infrared and ultrasonic detecting methods. Also, the touch panel 252 may further include a control circuit. The touch panel 252 may further include a tactile layer to provide a tactile reaction to a user. The (digital) pen sensor 254 may be, for example, a part of a touch panel or may include an additional sheet for recognition. The key 256 may include, for example, a physical button, an optical key, or a keypad. The ultrasonic input device 258 may detect (or sense) an ultrasonic signal, which is generated from an input device, through a microphone (e.g., a microphone 288) and may check data corresponding to the detected ultrasonic signal.

The display 260 (e.g., the display 160) may include a panel 262, a hologram device 264, a projector 266, and/or a control circuit for controlling the panel 262, the hologram device 264, or the projector 266. The panel 262 may be implemented, for example, to be flexible, transparent or wearable. The panel 262 and the touch panel 252 may be integrated into a single module. According to an embodiment, the panel 262 may include a pressure sensor (or force sensor) that measures the intensity of touch pressure by a user. The pressure sensor may be implemented integrally with the touch panel 252, or may be implemented as at least one sensor separately from the touch panel 252. The hologram device 264 may display a stereoscopic image in a space using a light interference phenomenon. The projector 266 may project light onto a screen so as to display an image. For example, the screen may be arranged in the inside or the outside of the electronic device 201. The interface 270 may include, for example, a high-definition multimedia interface (HDMI) 272, a universal serial bus (USB) 274, an optical interface 276, or a D-subminiature (D-sub) 278. The interface 270 may be included, for example, in the communication interface 170 illustrated in FIG. 1. Additionally or alternatively, the interface 270 may include, for example, a mobile high definition link (MHL) interface, a SD card/multi-media card (MMC) interface, or an infrared data association (IrDA) standard interface.

The audio module 280 may convert a sound and an electric signal in dual directions. At least a component of the audio module 280 may be included, for example, in the input/output interface 150 illustrated in FIG. 1. The audio module 280 may process, for example, sound information that is input or output through a speaker 282, a receiver 284, an earphone 286, or the microphone 288. For example, the camera module 291 may shoot a still image or a video. According to an embodiment, the camera module 291 may include at least one or more image sensors (e.g., a front sensor or a rear sensor), a lens, an image signal processor (ISP), or a flash (e.g., an LED or a xenon lamp). The power management module 295 may manage, for example, power of the electronic device 201. According to an embodiment, a power management integrated circuit (PMIC), a charger IC, or a battery or fuel gauge may be included in the power management module 295. The PMIC may have a wired charging method and/or a wireless charging method. The wireless charging method may include, for example, a magnetic resonance method, a magnetic induction method or an electromagnetic method and may further include an additional circuit, for example, a coil loop, a resonant circuit, a rectifier, or the like. The battery gauge may measure, for example, a remaining capacity of the battery 296 and a voltage, current or temperature thereof while the battery is charged. The battery 296 may include, for example, a rechargeable battery and/or a solar battery.

The indicator 297 may display a specific state of the electronic device 201 or a part thereof (e.g., the processor 210), such as a booting state, a message state, a charging state, and the like. The motor 298 may convert an electrical signal into a mechanical vibration and may generate the following effects: vibration, haptic, and the like. The electronic device 201 may include a processing device (e.g., a GPU) for supporting a mobile TV. The processing device for supporting the mobile TV may process media data according to the standards of digital multimedia broadcasting (DMB), digital video broadcasting (DVB), MediaFLO^{™}, or the like. Each of the above-mentioned components of the electronic device according to various embodiments of the disclosure may be configured with one or more components, and the names of the components may be changed according to the type of the electronic device. In various embodiments, some components of the electronic device (e.g., the electronic device 201) may be omitted or other additional components may be added. Furthermore, some of the components of the electronic device may be combined with each other so as to form one entity, so that the functions of the components may be performed in the same manner as before the combination.

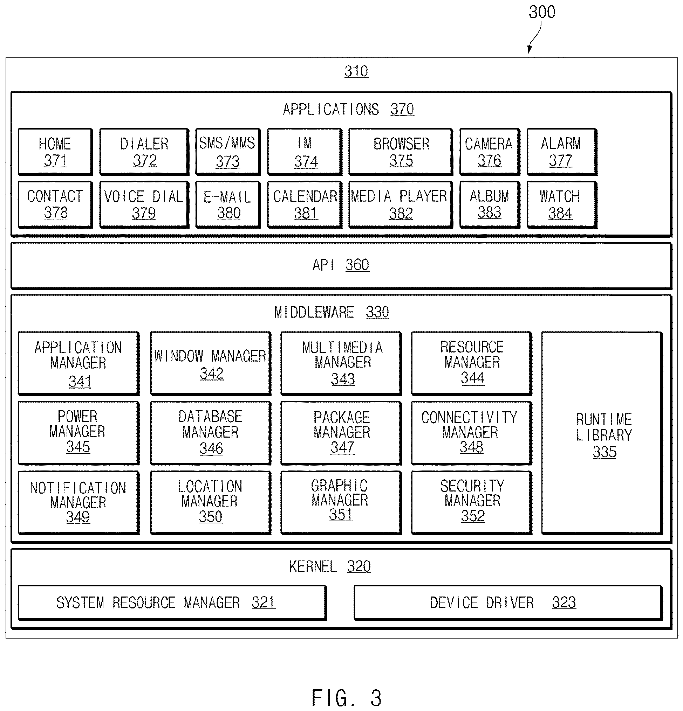

FIG. 3 illustrates a block diagram of a program module, according to various embodiments. According to an embodiment, a program module 310 (e.g., the program 140) may include an operating system (OS) to control resources associated with an electronic device (e.g., the electronic device 101), and/or diverse applications (e.g., the application program 147) driven on the OS. The OS may be, for example, Android^{™}, iOS^{™}, Windows^{™}, Symbian^{™}, Tizen^{™}, or Bada^{™}. Referring to FIG. 3, the program module 310 may include a kernel 320 (e.g., the kernel 141), a middleware 330 (e.g., the middleware 143), an application programming interface (API) 360 (e.g., the API 145), and/or an application 370 (e.g., the application program 147). At least a portion of the program module 310 may be preloaded on an electronic device or may be downloadable from an external electronic device (e.g., the first electronic device 102, the second electronic device 104, the server 106, or the like).

The kernel 320 (e.g., the kernel 141) may include, for example, a system resource manager 321 or a device driver 323. The system resource manager 321 may control, allocate, or retrieve system resources. According to an embodiment, the system resource manager 321 may include a process managing unit, a memory managing unit, a file system managing unit, or the like. The device driver 323 may include, for example, a display driver, a camera driver, a Bluetooth driver, a shared memory driver, a USB driver, a keypad driver, a Wi-Fi driver, an audio driver, or an inter-process communication (IPC) driver. The middleware 330 may provide, for example, a function that the application 370 needs in common, or may provide diverse functions to the application 370 through the API 360 to allow the application 370 to efficiently use limited system resources of the electronic device. According to an embodiment, the middleware 330 may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, or a security manager 352.

The runtime library 335 may include, for example, a library module that is used by a compiler to add a new function through a programming language while the application 370 is being executed. The runtime library 335 may perform input/output management, memory management, or capacities about arithmetic functions. The application manager 341 may manage, for example, a life cycle of at least one application of the application 370. The window manager 342 may manage a graphic user interface (GUI) resource that is used in a screen. The multimedia manager 343 may identify a format necessary for playing diverse media files, and may perform encoding or decoding of media files by using a codec suitable for the format. The resource manager 344 may manage resources such as a memory space or source code of the application 370. The power manager 345 may manage a battery or power, and may provide power information for an operation of an electronic device. According to an embodiment, the power manager 345 may operate with a basic input/output system (BIOS). The database manager 346 may generate, search for, or modify database that is to be used in the application 370. The package manager 347 may install or update an application that is distributed in the form of package file.

The connectivity manager 348 may manage, for example, wireless connection. The notification manager 349 may provide an event, for example, arrival message, appointment, or proximity notification to a user. For example, the location manager 350 may manage location information about an electronic device. The graphic manager 351 may manage a graphic effect that is provided to a user, or manage a user interface relevant thereto. The security manager 352 may provide, for example, system security or user authentication. According to an embodiment, the middleware 330 may include a telephony manager for managing a voice or video call function of the electronic device or a middleware module that combines diverse functions of the above-described components. According to an embodiment, the middleware 330 may provide a module specialized to each OS kind to provide differentiated functions. Additionally, the middleware 330 may dynamically remove a part of the preexisting components or may add new components thereto. The API 360 may be, for example, a set of programming functions and may be provided with a configuration that is variable depending on an OS. For example, in the case where an OS is the android or the iOS, it may provide one API set per platform. In the case where an OS is the tizen, it may provide two or more API sets per platform.

The application 370 may include, for example, applications such as a home 371, a dialer 372, an SMS/MMS 373, an instant message (IM) 374, a browser 375, a camera 376, an alarm 377, a contact 378, a voice dial 379, an e-mail 380, a calendar 381, a media player 382, an album 383, a watch 384, health care (e.g., measuring an exercise quantity, blood sugar, or the like) or offering of environment information (e.g., information of barometric pressure, humidity, temperature, or the like). According to an embodiment, the application 370 may include an information exchanging application to support information exchange between an electronic device and an external electronic device. The information exchanging application may include, for example, a notification relay application for transmitting specific information to an external electronic device, or a device management application for managing the external electronic device. For example, the notification relay application may include a function of transmitting notification information, which arise from other applications, to an external electronic device or may receive, for example, notification information from an external electronic device and provide the notification information to a user. The device management application may install, delete, or update for example, a function (e.g., turn-on/turn-off of an external electronic device itself (or a part of components) or adjustment of brightness (or resolution) of a display) of the external electronic device which communicates with the electronic device, and an application running in the external electronic device. According to an embodiment, the application 370 may include an application (e.g., a health care application of a mobile medical device) that is assigned in accordance with an attribute of an external electronic device. According to an embodiment, the application 370 may include an application that is received from an external electronic device. At least a portion of the program module 310 may be implemented by software, firmware, hardware (e.g., the processor 210), or a combination (e.g., execution) of two or more thereof, and may include modules, programs, routines, sets of instructions, processes, or the like for performing one or more functions.

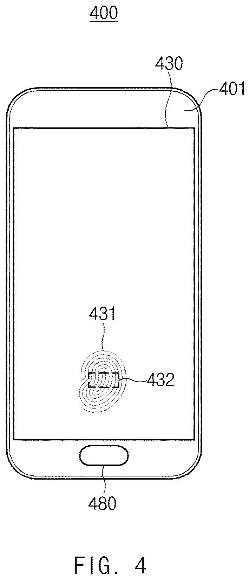

FIG. 4 is a front view of an electronic device according to an embodiment.

Referring to FIG. 4, an electronic device 400 (e.g., an electronic device 101, 200, 600, 700, 900, or 1000) according to an embodiment may include a display 430, a bezel 401, and a button 480.

The display 430 may be exposed through a front surface of the electronic device 400. The display 430 may display a guide 431 such that at least a portion of the guide 431 (or graphical indicator) overlaps a fingerprint sensing area 432. When the display 430 displays the guide 431, a user may touch the guide 431 with a finger and the electronic device 400 may obtain fingerprint information through the fingerprint sensing area 432 using, for example, a fingerprint sensor.

In the disclosure, the guide 431 may be an indicator that leads the user to touch the display 430 with the finger. Although the guide 431 is shown in the form of a fingerprint in FIG. 1, the form of the guide 431 is not limited to the example shown in FIG. 1. The fingerprint sensing area 432 may be an area overlapping the fingerprint sensor disposed under the display 430. The fingerprint sensing area 432 may be directly displayed on the display 430 or may not be displayed.

The bezel 401 may be disposed on a side of the display 430 and may be engaged with a housing of the electronic device 400. The bezel 401 may include a non-metal region and may, for example, be formed of a plastic injection. Although not shown in FIG. 1, a receiver, a proximity sensor, a camera, and the like may be disposed in a partial area of the bezel 401.

The button 480 may be disposed in a partial area of the bezel 401. For example, the button 480 may be referred to as a home button 480, a back button 480, a menu button 480, or the like. In a case where the button 480 is the home button 480, when the user presses the button 480, a home screen may be output on the display 430.

Although the electronic device 400 is illustrated as including the display 430, the bezel 401 and the button 480 in FIG. 4, the electronic device 400 may not also include the bezel 401 and the button 480.

In addition, although the fingerprint sensor is illustrated as being disposed below the fingerprint sensing area 432 of the display 430 in FIG. 4, it is not limited thereto, and the electronic device 400 may include a fingerprint sensor disposed below the button 480. In this case, the fingerprint sensing area may be included in the button 480, and the guide 431 may not be displayed on the display 430.

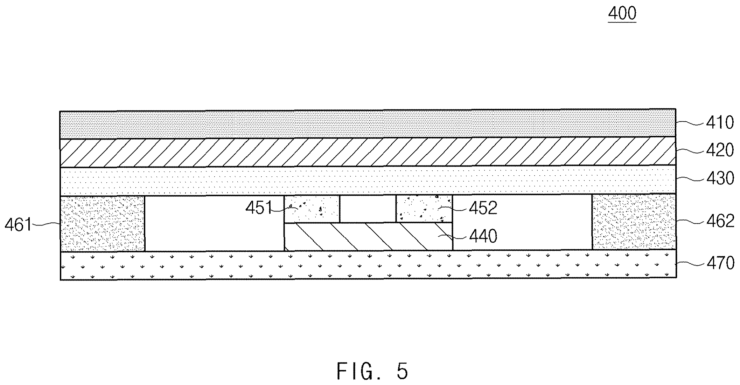

FIG. 5 is a cross-sectional view of an electronic device according to an embodiment.

Referring to FIG. 5, the electronic device 400 (e.g., electronic device 101, 200, 400, 600, 700, 900 or 1000) according to an embodiment may include a cover glass 410, an adhesive layer 420, the display 430, a fingerprint sensor 440, elastic members 451 and 452, structures 461 and 462, and a printed circuit board (PCB) 470.

The cover glass 410 may transmit light emitted from the display 430. The cover glass 410 may be formed of, for example, a tempered glass, a reinforced plastic, or a flexible polymer material. The cover glass 410 may protect the display 430 and other components included in the electronic device 400 from external shocks. The cover glass 410 may be referred to as a window.

The adhesive layer 420 may attach the cover glass 410 and the display 430 to each other. The adhesive layer 420 may be made of a transparent material capable of transmitting light generated by the display 430. For example, the adhesive layer 420 may be an optical clear adhesive (OCA).

The display 430 may be disposed parallel to the cover glass 410 under the cover glass 410 and the adhesive layer 420. The display 430 may include a touch sensor (or a touch panel) and a display panel. The touch sensor may sense proximity of an external object (or external body) with respect to the cover glass 410. The display panel may emit light in the direction of the cover glass 410.

The fingerprint sensor 440 may be disposed between the display 430 and the PCB 470. The fingerprint sensor 440 may be disposed parallel to the panel of the display 430 under the panel of the display 430. The fingerprint sensor 440 may obtain a pattern of an external object that is in contact with the cover glass 410. For example, when a user's finger touches the cover glass 410, the fingerprint sensor 440 may obtain fingerprint information of the finger. Although the fingerprint sensor 440 is illustrated as being disposed between the display 430 and the PCB 470 in FIG. 5, and the fingerprint sensor 440 is not limited thereto and may be disposed within the display 430, or between the cover glass 410 and the display 430. A size of the fingerprint sensor 440 may be smaller than a size of the display 430 and may be equal to the size of the display 430. For example, the fingerprint sensor 440 may be formed in at least a partial area of the display 430. When the size of the fingerprint sensor 440 is equal to that of the display 430, the electronic device 400 may obtain fingerprint information through the entire area of the display 430, for example, using the fingerprint sensor 440.

The number of fingerprint sensors 440 may be one or two or more. When the number of fingerprint sensors 440 is two or more, the electronic device 400 may obtain fingerprint information in a plurality of regions. The fingerprint sensor 440 may employ one of an optical system, an ultrasonic system, or an electrostatic system, and a type of the fingerprint sensor 440 is not limited to the above-described example.

The elastic members 451 and 452 may be disposed between the fingerprint sensor 440 and the display 430. The elastic members 451 and 452 may mitigate impact between the display 430 and the fingerprint sensor 440. For example, the elastic members 451 and 452 may be formed of sponge or rubber. The elastic members 451 and 452 may prevent foreign matters from being introduced to the fingerprint sensor 440.

The structures 461 and 462 may be configured to secure a space for mounting the fingerprint sensor 440. The structures 461 and 462 may also be referred to as brackets. The structures 461 and 462 may be made of a magnesium alloy. The structures 461 and 462 may be coupled to the display 430 and the PCB 470 and may physically support the display 430.

The PCB 470 may be disposed under the structures 461 and 462. The PCB 470 may be electrically connected to the display 430 and the fingerprint sensor 440 through a specified connector or specified wirings. According to an embodiment, parts, elements, or printed circuits of the electronic device 400 may be mounted or disposed on the PCB 470.

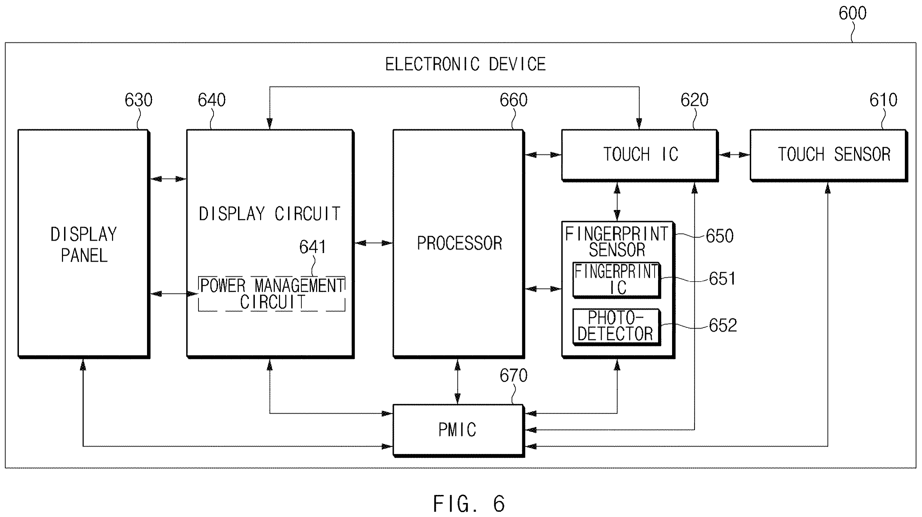

FIG. 6 is a block diagram illustrating a configuration of an electronic device according to an embodiment.

Referring to FIG. 6, an electronic device 600 (e.g., an electronic device 101, 200, 400, 700, 900, or 1000) according to an embodiment may include a touch sensor 610, a touch IC 620, a display panel 630, a display circuit (or a display drive circuit) 640, a fingerprint sensor 650 and a processor 660. It may further include a power management IC (PMIC) 670. In the disclosure, the touch IC 620 may be referred to as a control circuit.

The touch sensor 610 may detect the proximity of an external object. For example, the touch sensor 610 may sense proximity or contact of an external object with respect to a cover glass. The touch sensor 610 may be one of various types of sensors such as a resistive sensor, an electrostatic sensor, or an optical sensor. The touch sensor 610 may include a force sensor.

The touch IC 620 may be electrically connected to the touch sensor 610. The touch IC 620 controls the touch sensor 610 and may sense a signal related to a touch. The touch IC 620 may obtain coordinates where a touch event occurs based on a signal received from the touch sensor 610. The touch IC 620 may determine a gesture corresponding to the touch event (e.g., double tap, drag or flicking). The touch IC 620 may transfer information on the coordinates, the gesture, or the like to the processor 660.

According to an embodiment, the touch IC 620 may be electrically connected to the display circuit 640, the fingerprint sensor 650 and the processor 660. The touch IC 620 may control the display circuit 640 and the fingerprint sensor 650 while the processor 660 is in a sleep state (or a low power state). The touch IC 620 may wake up (or activate) the display circuit 640 and the fingerprint sensor 650. The touch IC 620 may wake up (or activate) the processor 660 that is in the sleep state.

The display panel 630 may emit light. The display panel 630 may output various images. The display panel 630 also functions as a light source for operation of the fingerprint sensor 650. The display panel 630 may be, for example, an organic light emitting diode (OLED) panel.

The display circuit 640 is electrically connected to the display panel 630. The display circuit 640 may be, for example, a display driver IC (DDI) that drives the display panel 630. The display circuit 640 may also adjust illuminance of the display panel 630. According to an embodiment, the display circuit 640 may be electrically connected to the touch IC 620 and the processor 660 and may be controlled by the touch IC 620 or the processor 660.

According to an embodiment, the display circuit 640 may include a power management circuit 641. The power management circuit 641 may control power supplied to the display panel 630. For example, the power management circuit 641 may control the power supplied to the display panel 630 while the display panel 630 is driven in a low power mode (e.g., AOD (always on display)). In the disclosure, the low power mode may mean a mode in which the display panel 630 is driven with a specified low illuminance while the processor 660 is in the sleep state. The power management circuit 641 may be optional and may be omitted depending on implementations of the electronic device 600.

The fingerprint sensor 650 may detect a pattern of an external object using light emitted from the display panel 630. The fingerprint sensor 650 can determine whether a pattern drawn on an external object corresponds to a fingerprint. The fingerprint sensor 650 may obtain a fingerprint image or extract minutiae features contained in the fingerprint. According to an embodiment, the fingerprint sensor 650 may be electrically connected to the touch IC 620 and the processor 660 and may be controlled by the touch IC 620 or the processor 660. The fingerprint sensor 650 may include a fingerprint IC 651 and a photodetector 652. The photodetector 652 may sense light which is emitted by the display panel 630 and reflected by an external object. The fingerprint IC 651 may control the photodetector 652 and process information detected by the photodetector 652.

The processor 660 may be electrically connected to the touch IC 620, the display circuit 640, and the fingerprint sensor 650. The processor 660 may control the touch IC 620, the display circuit 640, and the fingerprint sensor 650. The processor 660 that is in the sleep state may be woken up by the touch IC 620.

The PMIC 670 may be electrically connected to the touch sensor 610, the touch IC 620, the display panel 630, the display circuit 640, the fingerprint sensor 650 and the processor 660. The PMIC 670 may control power supplied to the touch sensor 610, the touch IC 620, the display panel 630, the display circuit 640, the fingerprint sensor 650 and the processor 660. According to an embodiment, the PMIC 670 may control the power supplied to the display panel 630 while the display panel 630 is driven in a normal power mode. In the disclosure, the normal power mode may refer to a mode in which the display panel 630 is driven while the processor 660 is in an awake state. When the power management circuit 641 is omitted, the PMIC 670 may control the power supplied to the display panel 630 while the display panel 630 is driven in the low power mode or the normal power mode.

According to one embodiment, the touch IC 620 may control the display circuit 640 such that at least a partial area of the display panel 630 emits light when a touch event by an external object (or an external body) is detected within a specified area of the touch sensor 610 while the processor 660 is in the sleep state (or the low power state). While the processor 660 is in the low power state, the touch IC 620 may detect an input by an external object through a partial area of the display panel 630 and determine whether the input by the external object is an input related to fingerprint sensing. For example, when a specified touch event by an external object is detected in the specified area of the touch sensor 610 while the processor 660 is in the low power state, the touch IC 620 may determine that the input by the external object is the input related to fingerprint sensing. When the input by the external object is not the input related to fingerprint sensing, the touch IC 620 discards the input by the external object, and when the input by the external object is the input related to fingerprint sensing, the touch IC 620 outputs light through the partial area of the display panel 630 in the low power state. For example, the touch IC 620 may be in an awake state while the processor 660 is in the sleep state. The power consumed by the touch IC 620 may be lower than the power consumed by the processor 660. The touch IC 620 may detect a touch event within the specified area of the touch sensor 610 while the processor 660 is in the sleep state. The specified area of the touch sensor 610 may be, for example, an area where the fingerprint sensor 650 and the touch sensor 610 overlap each other. The external object may be a conductor capable of being detected by the touch sensor 610. The touch IC 620 may transmit a request to turn on the display panel 630 to the display circuit 640 to secure a light source for sensing a fingerprint when a touch event is detected. When the request is received, the display circuit 640 may drive the display panel 630 and may allow at least a partial area of the display panel 630 to emit light. The partial area of the display panel 630 may be, for example, an area overlapping the fingerprint sensor 650.

According to one embodiment, when a touch event of a specified pattern by an external object is detected in a specified area of the touch sensor 610 while the processor 660 is in the sleep state, the touch IC 620 may control the display circuit 640 such that at least a partial area of the display panel 630 emits light. For example, the touch IC 620 may control the display circuit 640 only when a touch event of a specified pattern, such as a double tap, a flicking, a drag, or the like is detected while the processor 660 is in the sleep state.

According to one embodiment, when a touch event by an external object is detected in a specified area of the touch sensor 610 while the display panel 630 is driven in the low power mode (or an input by the external object is determined to be an input related to fingerprint sensing), the touch IC 620 may control the display circuit 640 such that the display panel 630 is driven in the normal power mode.

For example, the display panel 630 may be driven in the low power mode (e.g., AOD) while the processor 660 is in the sleep state. For example, while the display panel 630 is driven in the low power mode, the power management circuit 641 included in the display circuit 640 may control the power supplied to the display panel 630. The display circuit 640 may apply a first gamma value to the display panel 630 while the display panel 630 is driven in the low power mode. The display circuit 640 may determine the first gamma value using a gamma table previously stored in a register.

When the touch IC 620 detects a touch event in the specified area of the touch sensor 610, the display panel 630 may be driven in the normal power mode. For example, the display circuit 640 may drive the display panel 630 using the power supplied from the PMIC 670 to the display panel 630. The display circuit 640 may change a gamma value to be applied to the display panel 630. For example, the display circuit 640 may apply a second gamma value to the display panel 630 while the display panel 630 is driven in the normal power mode. The display circuit 640 may determine the second gamma value using the gamma table previously stored in the register.

According to one embodiment, the display circuit 640 may store whether the display circuit 640 is busy, a gamma value corresponding to the low power mode, a gamma value corresponding to the normal power mode, or at least some of registers associated with a driving sequence for the display panel 630. For example, the display circuit 640 may store a 1-bit read only register that represents a busy state of the display circuit 640. As another example, the display circuit 640 may store a register for storing a gamma value corresponding to the low power mode. As still another example, the display circuit 640 may store a register for storing a gamma value corresponding to the normal power mode. As still another example, the display circuit 640 may store a register for storing sequences for driving the display panel 630 in the low power mode and the normal power mode. A register associated with a driving sequence may store a register address, a register value, and a delay value for each of the sequences.

According to one embodiment, the touch IC 620 or the fingerprint sensor 650 is set to wake up the processor 660 when a pattern of an external object corresponds to a fingerprint. For example, the touch IC 620 may transfer a request to determine whether the pattern of the external object corresponds to a fingerprint to the fingerprint sensor 650 when at least a partial area of the display panel 630 emits light. When the request is received, the fingerprint sensor 650 may detect the pattern of the external object using the light emitted from the display panel 630. The fingerprint sensor 650 determines whether the pattern of the external object corresponds to a fingerprint by comparing the pattern of the external object with a previously-stored pattern. When the pattern of the external object corresponds to the fingerprint, the fingerprint sensor 650 may transfer a signal indicating that the pattern of the external object corresponds to the fingerprint to the touch IC 620. The touch IC 620 may transfer a request to turn off the display panel 630 to the display circuit 640. When the request is received, the display circuit 640 may stop driving of the display panel 630. The display circuit 640 may stop the driving of the display panel 630 and then transfer a signal indicating that the display panel 630 is turned off to the touch IC 620. The touch IC 620 or the fingerprint sensor 650 may transmit an interrupt to wake up the processor 660 to the processor 660 when the display panel 630 is turned off. The processor 660 may be woken up when the interrupt is received.

According to one embodiment, the processor 660 may obtain fingerprint information using the fingerprint sensor 650 when the processor 660 is woken up and may unlock the electronic device 600 when the fingerprint information matches the previously-stored information. For example, the processor 660 may control the display circuit 640 such that at least a partial area of the display panel 630 emits light. The display panel 630 may be driven in the normal power mode. The processor 660 may obtain information on a fingerprint image or minutiae features of a fingerprint using the fingerprint sensor 650. The processor 660 may compare information on the obtained fingerprint image or the minutiae features of the fingerprint with information on a previously-stored fingerprint image or minutiae features of a fingerprint. The previously-stored information may be stored, for example, in a trust zone of the processor 660. The processor 660 may unlock the electronic device 600 when the obtained information matches the previously-stored information.

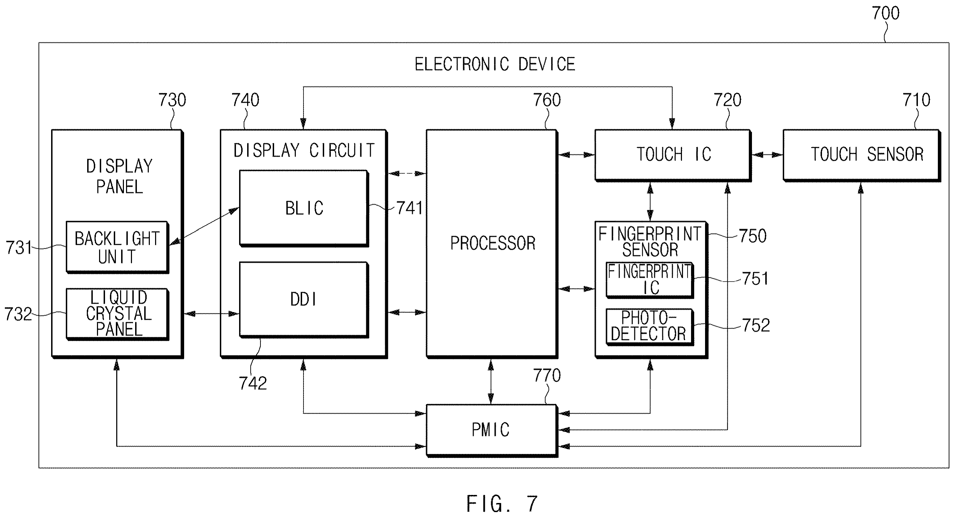

FIG. 7 is a block diagram illustrating a configuration of an electronic device according to an embodiment.

Referring to FIG. 7, an electronic device 700 (e.g., an electronic device 101, 200, 400, 600, 900, or 1000) according to an embodiment may include a touch sensor 710, a touch IC 720, a display panel 730, a display circuit 740, a fingerprint sensor 750, a processor 760, and a PMIC 770. The touch sensor 710, the touch IC 720, the fingerprint sensor 750, the processor 760 and the PMIC 770 illustrated in FIG. 7 may have the same configurations of those of the touch sensor 610, the touch IC 620, the fingerprint sensor 650, the processor 660, and the PMIC 670 illustrated in FIG. 6. For convenience of description, the repeated description of the touch sensor 710, the touch IC 720, the fingerprint sensor 750, the processor 760, and the PMIC 770 will be omitted.

The display panel 730 may be, for example, a liquid crystal display (LCD). The display panel 730 may include a backlight unit 731 and a liquid crystal panel 732. The display panel 730 may emit light. The display panel 730 may also function as a light source for operation of the fingerprint sensor 750.

The display circuit 740 may be electrically connected to the display panel 730. The display circuit 740 may include a backlight (BL) IC and a DDI 742. The BL IC 741 may drive the backlight unit 731 included in the display panel 730. The BL IC 741 may adjust illuminance of the backlight unit 731. The DDI 742 may drive the display panel 730. The DDI 742 may drive the liquid crystal panel 732 included in the display panel 730, for example.

According to one embodiment, when a touch event by an external object is detected within a specified area of the touch sensor 710 while the processor 760 is in the sleep state, the touch IC 720 may control display the display circuit 740 such that at least a partial area of the display panel 730 emits light. For example, the touch IC 720 may be in an awake state while the processor is in the sleep state. The touch IC 720 may detect a touch event within the specified area of the touch sensor 710 while the processor 760 is in the sleep state. The touch IC 720 may transfer a request to turn on the backlight unit 731 to the display circuit 740, for example, the BL IC 741 to secure a light source for detecting a fingerprint when a touch event is detected. When receiving the request, the BL IC 741 may drive the backlight unit 731 and allow at least a partial area of the display panel 730 to emit light.

According to one embodiment, the processor 760 may be electrically connected to the display circuit 740 via the touch IC 720. In this case, an interface between the processor 760 and the display circuit 740 may be omitted. The processor 760 may control the display circuit 740 via the touch IC 720.

According to one embodiment, the electronic device may detect a fingerprint using infrared light or ultrasound as well as visible light emitted by the display panel 730 (or the display panel 630 of FIG. 6). For example, the touch IC 720 (or the touch IC 620 of FIG. 6) may be electrically connected to modules that emit a source for obtaining fingerprint information, such as an infrared (IR) diode module, an ultrasonic module, or a piezo module. The touch IC 720 may control the IR diode module, the ultrasonic module, or the piezo module in a similar manner to a manner for controlling the display circuit 740 (or the display circuit 640).

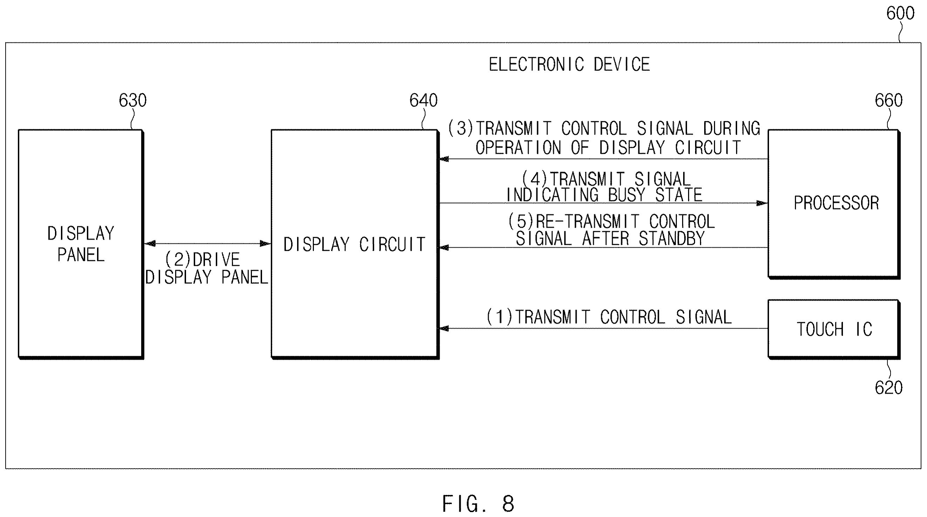

FIG. 8 is a block diagram illustrating a configuration of an electronic device according to an embodiment.

Referring to FIG. 8, an electronic device 600 (e.g., an electronic device 101, 200, 400, 700, 900, or 1000) according to an embodiment may include the touch IC 620 (e.g., the touch IC 720), the display panel 630 (e.g., the display panel 730), the display circuit 640 (e.g., the display circuit 740), and the processor 660 (e.g., the display circuit 740). For convenience of description, some components of the electronic device 600 are omitted.

According to one embodiment, the touch IC 620 (e.g., the touch IC 720) may transmit a control signal to the display circuit 640 (e.g., the display circuit 740) (1). For example, the touch IC 620 may transmit a control signal for controlling the display circuit 640 (e.g., the display circuit 740) such that at least a partial area of the display panel 630 (e.g., the display panel 730) emits light when a touch event is detected while the processor 660 (e.g., the processor 760) is in the sleep state.

According to one embodiment, the display circuit 640 (e.g., the display circuit 740) may drive the display panel 630 (e.g., the display panel 730) when the control signal is received (2). For example, the display circuit 640 (e.g., using the BLIC 741 in the display circuit 740) may drive the display panel 630 (e.g., the display panel 730) such that the at least a partial area of the display panel 630 (e.g., the display panel 730) emits light.

According to one embodiment, the processor 660 (e.g., the processor 760) may transmit the control signal to the display circuit 640 (e.g., the display circuit 740) while the display circuit 640 (e.g., the display circuit 740) operates (3). The processor 660 may transmit a control signal for controlling the display circuit 640 (e.g., the display circuit 740) to the display circuit 640 (e.g., the display circuit 740) in various cases, such as, when a call is received, when a message is received, when a notification is generated, when a timer is operated, or when a wake-up occurs by a user while the display circuit 640 (e.g., the display circuit 740 uses the BLIC 741 or the DDI 742) drives the display panel 630 (e.g., the display panel 730) such that the at least a partial area of the display panel 630 (e.g., the display panel 730) emits light for fingerprint recognition.

According to one embodiment, the display circuit 640 (e.g., the display circuit 740 or the BLIC 741) may transmit a signal representing a busy state to the processor 660 (e.g., the processor 760 or another module (e.g., the PMIC 670 or 770)) when another request is received from the processor 660 (e.g., the processor 760 or another module (e.g., the PMIC 670 or 770) capable of transmitting a control signal to the display circuit) while performing operation requested by the touch IC 620 (e.g., the touch IC 720) (4). For example, the display circuit 640 (e.g., the display circuit 740 or the BLIC 741) may transmit a signal representing a busy state to the processor 660 (e.g., the processor 760 or another module (e.g., the PMIC 670 or 770)) to prevent a race condition when a control signal is received from the processor 660 (e.g., the processor 760 or another module (e.g., the PMIC 670 or 770)) while driving the display panel 630 (e.g., the display panel 730) according to the control signal received from the touch IC 620 (e.g., the touch IC 720).

According to one embodiment, processor 660 (e.g., the processor 760 or another module (e.g., PMIC 670 or 770)) may retransmit the control signal after waiting when the signal indicating the busy state is received (5). For example, the processor 660 (e.g., the processor 760 or another module (e.g., PMIC 670 or 770)) may wait for using a code as follows:

```
 While (dsi_read(DDI_BUSY) == DDI BUSY) {
 mdelay(10); }
 display_init_sequence();
```

For example, the processor 660 or 760 may wait for 10 msec when the display circuit 640 or 740 (e.g., DDI or BLIC) is in the busy state and then redetermine whether the display circuit 640 is in the busy state. The processor 660 may repeatedly perform the above described operation every 10 msec. The processor 660 may retransmit the control signal for driving the display circuit 640 when the busy state of the display circuit 640 is terminated.

According to one embodiment, the processor 660 may control other modules that emit a source for obtaining of fingerprint information, such as an IR diode module, an ultrasonic module, or a piezo module, in a manner similar to the above-described manner.

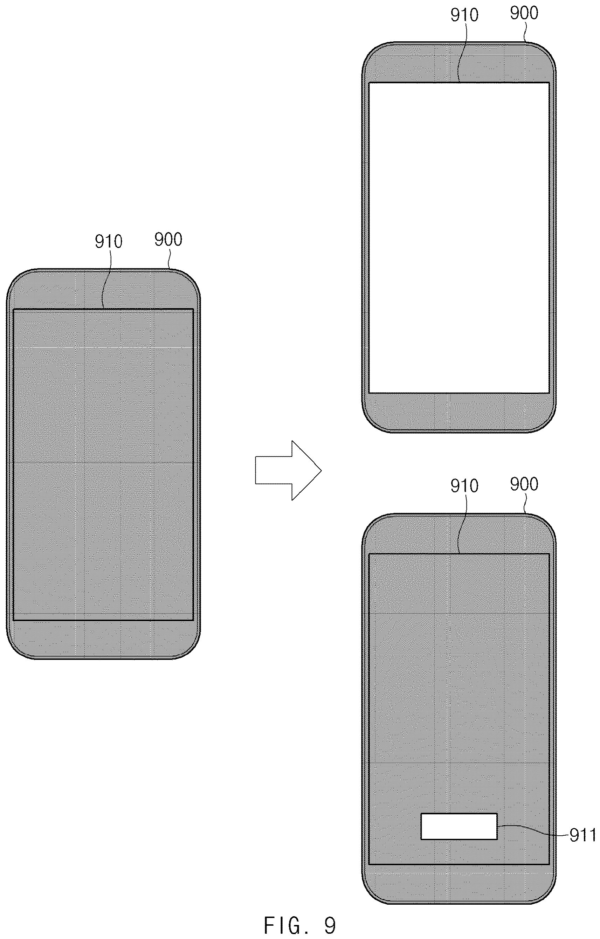

FIG. 9 illustrates an exemplary operation of an electronic device, according to an embodiment.

Referring to FIG. 9, an electronic device 900 (e.g., electronic device 101, 200, 400, 600, 700, or 1000) according to an embodiment may include a display 910. In the disclosure, the term "display" may be understood to include a display circuit and a display panel. The electronic device 900 may be in a sleep state. The display 910 may be deactivated while the electronic device 900 is in the sleep state. While the electronic device 900 is in the sleep state, a processor included in the electronic device 900 may be in the sleep state. While the electronic device 900 is in the sleep state, a touch IC included in the electronic device 900 may be in an awake state.

According to an embodiment, while the electronic device 900 is in the sleep state, when a touch event on the display 910 is detected by the touch IC, the electronic device 900 may control the display 910 such that at least a partial area of the display 910 emits light. The electronic device 900 may control the display 910 such that an entire area of the display 910 emits light. The electronic device 900 may control the display 910 such that a fingerprint recognition area 911 of the display 910 emits light. The fingerprint recognition area 911 may be an area overlapping a fingerprint sensor included in the electronic device 900. The electronic device 900 may drive the display 910 with power controlled by a PMIC included in the electronic device 900.

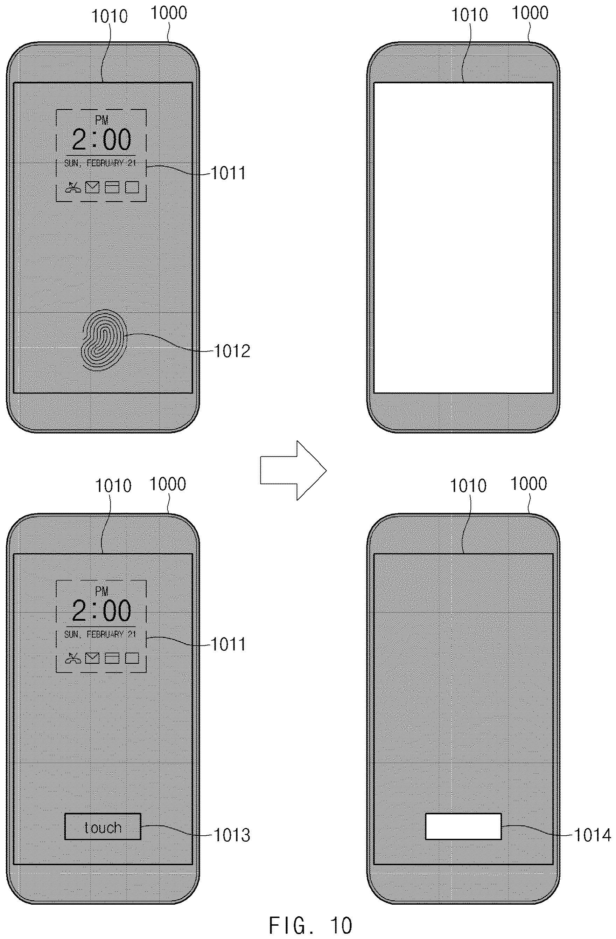

FIG. 10 illustrates an exemplary operation of an electronic device, according to an embodiment.

Referring to FIG. 10, an electronic device 1000 (e.g., electronic device 101, 200, 400, 600, 700, or 900) according to an embodiment may include a display 1010. The electronic device 1000 may be in a sleep state. The display 1010 may be driven in a low power mode while the electronic device 1000 is in the sleep state. The electronic device 1000 may drive the display 1010 with power controlled by a power management module embedded in the display 1010 in the low power mode. The electronic device 1000 may display a user interface 1011 that displays time, date, notification, or the like on the display 1010. The electronic device 1000 may display, for example, a fingerprint-like guide 1012 on the display 1010 to induce a user to input a fingerprint. As another example, the electronic device 1000 may display a box-shaped guide 1013. While the electronic device 1000 is in the sleep state or while the display 1010 is driven in the low power mode, a processor included in the electronic device 1000 may be in the sleep state, or a touch IC included in the electronic device 1000 may be in the awake state.

According to one embodiment, when a touch event is detected while the electronic device 1000 is in the sleep state or while the display 1010 is driven in the low power mode, the electronic device 1000 (e.g., the display 1010 circuit) may remove a screen output while being driven in the low power mode. The electronic device 1000 may drive the display 1010 in a normal power mode to emit light for sensing a pattern of an external object using a touch sensor. For example, the electronic device 1000 may control the display 1010 such that an entire area of the display 1010 emits light, and may control the display 1010 such that a fingerprint recognition area 1014 of the display 1010 emits light. The fingerprint recognition area 1014 may be an area overlapping a fingerprint sensor included in the electronic device 1000. The electronic device 1000 may drive the display 1010 in the normal power mode with power controlled by a PMIC included in the electronic device 1000.

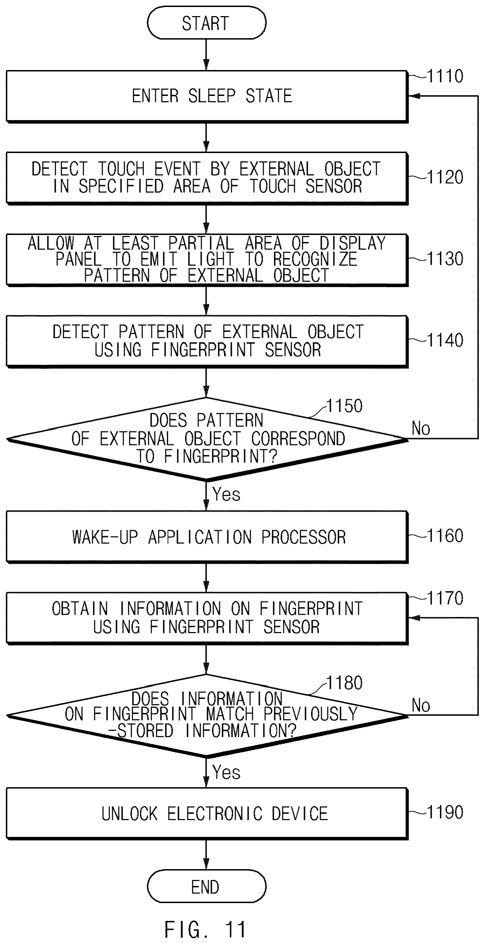

FIG. 11 is a flowchart for describing a method for recognizing a fingerprint in an electronic device according to an embodiment.

It is assumed that the electronic device 600 of FIG. 6 or the electronic device 700 of FIG. 7 performs a process of FIG. 11. Also, in a description of FIG. 11, the operation described as being performed by the electronic device may be understood as being controlled by the touch IC 620, the fingerprint sensor 650, or the processor 660 of the electronic device 600, or may be understood as being controlled by the touch IC 720, the fingerprint sensor 750, or the processor 760 of the electronic device 700.

Referring to FIG. 11, in operation 1110, the electronic device may enter a sleep state. For example, the electronic device may enter a sleep state (or a low power state) when the electronic device does not operate for a specified time, or when an input is applied to a power button by the user.

In operation 1120, the electronic device may detect a touch event by an external object within a specified area of a touch sensor. For example, the electronic device may detect an input by an external object through a partial area of the display (e.g., an area overlapping the fingerprint sensor of the touch sensor).

In operation 1130, the electronic device may allow at least a partial area of the display panel to emit light so as to recognize a pattern of the external object. The electronic device outputs light through the partial area of the display panel while maintaining a low power state of the processor, when the input by an external object is an input related to fingerprint sensing.

In operation 1140, the electronic device detects the pattern of the external object using a fingerprint sensor. The electronic device detects the pattern of the external object using light emitted from the display panel.

In operation 1150, the electronic device determines whether the pattern of the external object corresponds to a fingerprint. For example, the electronic device may determine whether the detected pattern of the external object is a fingerprint or not, by comparing the detected pattern of the external object with a previously-stored pattern. When the pattern of the external object does not correspond to the fingerprint, the electronic device may again enter the sleep mode.

When the pattern of the external object corresponds to a fingerprint, in operation 1160, the electronic device may wake up an application processor. For example, the electronic device may wake up the processor by transmitting an interrupt from another component of the electronic device (e.g., a touch IC or a fingerprint sensor) to the application processor.

In operation 1170, the electronic device may obtain fingerprint information using the fingerprint sensor. For example, the electronic device may obtain a fingerprint image using the fingerprint sensor for user authentication. The electronic device may extract minutiae features from the fingerprint image.

In operation 1180, the electronic device determines whether the fingerprint information matches the previously-stored information. For example, the electronic device may compare the fingerprint image obtained for user authentication with a previously-stored fingerprint image. As another example, the electronic device may compare the obtained minutiae features with the previously-stored minutiae features. The electronic device may determine whether the both match each other by comparing the both. When the fingerprint information does not match the previously-stored information, the electronic device may re-obtain the fingerprint information using the fingerprint sensor.

When the fingerprint information matches the previously-stored information, in operation 1190, the electronic device may unlock the electronic device. The electronic device authenticates the user when the fingerprint information matches the previously-stored information. The electronic device may be unlocked when the user is authenticated.

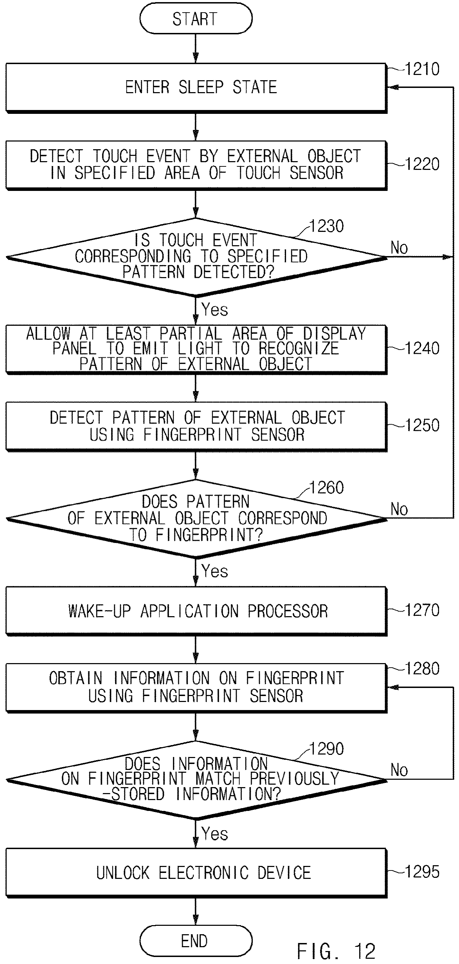

FIG. 12 is a flowchart for describing a method of recognizing a fingerprint in an electronic device according to an embodiment.

Hereinafter, it is assumed that the electronic device 600 of FIG. 6 or the electronic device 700 of FIG. 7 performs a process of FIG. 12. Also, in the description with reference to FIG. 12, the operation described as being performed by the electronic device may be understood as being controlled by the touch IC 620, the fingerprint sensor 650, or the processor 660 of the electronic device 600, or may be understood as being controlled by the touch IC 720, the fingerprint sensor 750, or the processor 760 of the electronic device 700.

Referring to FIG. 12, in operation 1210, the electronic device may enter a sleep state.

In operation 1220, the electronic device may detect a touch event by an external object within a specified area of a touch sensor.

In operation 1230, the electronic device may determine whether a touch event corresponding to a specified pattern has been detected. For example, the electronic device may determine whether the touch event corresponds to a specified pattern, such as a double tap, flicking, or drag. The electronic device may again enter the sleep mode when a touch event corresponding to the specified pattern is not detected.

When a touch event corresponding to the specified pattern is detected, in operation 1240, the electronic device may allow at least a partial area of the display panel to emit light so as to recognize a pattern of the external object.

In operation 1250, the electronic device may detect a pattern of an external object using a fingerprint sensor.

In operation 1260, the electronic device may determine whether the pattern of the external object corresponds to a fingerprint.

When the pattern of the external object corresponds to a fingerprint, in operation 1270, the electronic device may wake up an application processor.

In operation 1280, the electronic device may obtain fingerprint information using a fingerprint sensor.

In operation 1290, the electronic device may determine whether the fingerprint information matches previously-stored information.

If the fingerprint information matches the previously-stored information, in operation 1295, the electronic device may unlock the electronic device.

The term "module" used in this disclosure may include a unit composed of hardware, software and firmware and may be interchangeably used with the terms "unit", "logic", "logical block", "part" and "circuit". The "module" may be an integrated part or may be a minimum unit for performing one or more functions or a part thereof. The "module" may be implemented mechanically or electronically and may include at least one of an application-specific IC (ASIC) chip, a field-programmable gate array (FPGA), and a programmable-logic device for performing some operations, which are known or will be developed. At least a part of an apparatus (e.g., modules or functions thereof) or a method (e.g., operations) according to various embodiments may be, for example, implemented by instructions stored in computer-readable storage media (e.g., the memory 130) in the form of a program module. The instruction, when executed by a processor (e.g., the processor 120), may cause the processor to perform a function corresponding to the instruction. A computer-readable recording medium may include a hard disk, a floppy disk, a magnetic media (e.g., a magnetic tape), an optical media (e.g., a compact disc read only memory (CD-ROM) and a digital versatile disc (DVD), a magnetooptical media (e.g., a floptical disk)), and an internal memory. Also, the one or more instructions may contain a code made by a compiler or a code executable by an interpreter. A module or a program module according to various embodiments may include at least one of the above components, or a part of the above components may be omitted, or other components may be further included. Operations performed by a module, a program module, or other components according to various embodiments may be executed sequentially, in parallel, repeatedly, or in a heuristic method or some operations may be executed in different sequences or may be omitted. Alternatively, other operations may be added.

While the disclosure has been shown and described with reference to various embodiments thereof, it will be understood by those skilled in the art that various changes in form and details may be made therein without departing from the scope of the disclosure as defined by the appended claims.

## Claims

1. An electronic device (600, 700) comprising:
a display (630, 730) including a touch panel (610, 710);
a fingerprint sensor (650, 750) configured to sense a fingerprint input through a partial area of the display;
a display drive circuit (640, 740) electrically connected to the display to drive the display;
an application processor (660, 760);
a touch sensor (610, 710) configured to sense a signal related to a touch; and
a touch IC (620, 720) configured to:
control the touch sensor to detect an input by an external object with respect to the partial area of the display while the application processor is in a low power state;
activate the partial area of the display while the application processor is in the low power state;
detect a pattern drawn on the external object using the fingerprint sensor (650, 750) while the application processor is in the low power state;
determine whether the input with respect to the partial area is caused by a fingertip by comparing the pattern of the external object with a previously-stored pattern while the application processor is in the low power state;
discard the input without authentication when the input by the external object is not caused by the fingertip such that the application processor keeps in the low power state; and
allow the fingerprint sensor to obtain fingerprint information of the input, when the input by the external object is caused by the fingertip,
wherein the fingerprint sensor is configured to obtain fingerprint information of the input using light output from the partial area of the display and provides the fingerprint information to the application processor, when the input by the external object is caused by the fingertip, and
wherein the application processor is configured to authenticate the fingerprint information for unlocking the electronic device.

2. The electronic device of claim 1, wherein the touch sensor is configured to wake up the application processor when the input by the external object is an input caused by the fingertip.

3. The electronic device of claim 1, wherein the application processor is configured to unlock the electronic device when the fingerprint information matches previously-stored information.

4. The electronic device of claim 1, wherein the touch sensor is configured to determine that the input by the external object is the input caused by the fingertip when a specified touch event by the external object is detected in a specified area of the touch panel while the processor is in the low power state.

5. The electronic device of claim 1, wherein the display drive circuit (740) includes at least a part of a display driver IC (DDI) (742) or a back light (BL) IC (741).

6. The electronic device of claim 1, wherein at least a portion of the partial area of the display overlaps the fingerprint sensor.

7. The electronic device of claim 1, wherein the touch sensor is configured to control the display drive circuit such that the display is driven in a normal power mode when the input by the external object caused by the fingertip is detected while the display is driven in a low power mode.

8. The electronic device of claim 1, further comprising:
a power management IC (PMIC) (670, 770) configured to supply power to the touch panel, the touch sensor, the display, the display drive circuit, the fingerprint sensor and the application processor,
wherein the display drive circuit is configured to drive the display using power supplied from the PMIC when the input by the external object caused by the fingertip is detected while the display is driven using power supplied from a power management circuit in the display drive circuit.

9. The electronic device of claim 1, wherein the display drive circuit is configured to change a gamma value to be applied to the display when the input by the external object caused by the fingertip is detected while the display is driven in a low power mode.

10. The electronic device of claim 1, wherein the display drive circuit is configured to remove a screen output while being driven in a low power mode and drive the display to emit the light for detecting the pattern of the external object when the input by the external object caused by the fingertip is detected while the display is driven in the lower power mode.

11. The electronic device of claim 1, wherein the display drive circuit stores information on whether the display drive circuit is busy, a gamma value corresponding to a low power mode, a gamma value corresponding to a normal power mode, and at least some of registers associated with driving sequences for the display.

12. The electronic device of claim 1, wherein the application processor is electrically connected to the display drive circuit through the touch IC (620, 720).

13. The electronic device of claim 1, wherein the display drive circuit is configured to transmit a signal representing a busy state to the application processor when another request is received from the application processor while operation requested by the touch IC is performed.

14. A method (1210) for recognizing a fingerprint in an electronic device (600, 700) including a touch sensor (610, 710), a display (630, 730), a fingerprint sensor (650, 750), a touch IC (620, 720) and an application processor (660, 760), comprising:
detecting (1120), by the touch sensor, an input by an external object with respect to a partial area of the display while the application processor is in a low power state;
activating, by the touch IC (620, 720), the partial area of the display while the processor is in the low power state;
detecting (1140), by the touch IC (620, 720), a pattern drawn on the external object using the fingerprint sensor (650, 750) while the application processor is in the low power state;
determining (1230), by the touch IC (620, 720), whether the input with respect to the partial area is caused by a fingertip by comparing the pattern of the external object with a previously-stored pattern, while the application processor is in the low power state;
discarding, by the touch IC (620, 720), the input without authentication when the input by the external object is not caused by the fingertip such that the application processor keeps in a low power state; and
allowing, by the touch IC (620, 720), the fingerprint sensor to obtain fingerprint information of the input when the input by the external object is caused by the fingertip,
wherein the fingerprint sensor obtains fingerprint information of the input using light output from the partial area of the display and provide the fingerprint information to the application processor, when the input by the external object is caused by the fingertip, and
wherein the application processor authenticates the fingerprint information for unlocking the electronic device.

## Patentansprüche

1. Elektronische Vorrichtung (600, 700), umfassend:
eine Anzeige (630, 730) ein Touch-Panel (610, 710) enthaltend;
einen Fingerabdrucksensor (650, 750), der so konfiguriert ist, dass er eine Fingerabdruckeingabe durch einen Teilbereich der Anzeige erfasst;
eine Anzeigetreiberschaltung (640, 740), die elektrisch mit der Anzeige verbunden ist, um die Anzeige anzutreiben;
einen Anwendungsprozessor (660, 760);
einen Berührungssensor (610, 710), der so konfiguriert ist, dass er ein Signal im Zusammenhang mit einer Berührung erfasst; und
einen Touch-IC (620, 720), der konfiguriert ist zum:
Steuern des Berührungssensors, um eine Eingabe durch ein externes Objekt in Bezug auf den Teilbereich der Anzeige zu erkennen, während sich der Anwendungsprozessor in einem Energiesparzustand befindet;
Aktivieren des Teilbereichs der Anzeige, während sich der Anwendungsprozessor im Energiesparzustand befindet;
Erkennen eines auf dem externen Objekt gezeichneten Musters unter Verwendung des Fingerabdrucksensors (650, 750), während sich der Anwendungsprozessor im Energiesparzustand befindet;
Bestimmen, ob die Eingabe in Bezug auf den Teilbereich durch eine Fingerspitze verursacht wird, indem das Muster des externen Objekts mit einem zuvor gespeicherten Muster verglichen wird, während sich der Anwendungsprozessor im Energiesparzustand befindet;
Verwerfen der Eingabe ohne Authentifizierung, wenn die Eingabe durch das externe Objekt nicht durch die Fingerspitze verursacht wird, sodass der Anwendungsprozessor im Energiesparzustand bleibt; und
Ermöglichen, dass der Fingerabdrucksensor Fingerabdruckinformationen der Eingabe erhält, wenn die Eingabe durch das externe Objekt durch die Fingerspitze verursacht wird,
wobei der Fingerabdrucksensor so konfiguriert ist, dass er Fingerabdruckinformationen der Eingabe unter Verwendung von Lichtausgabe aus dem Teilbereich der Anzeige erhält, und die Fingerabdruckinformationen dem Anwendungsprozessor bereitstellt, wenn die Eingabe durch das externe Objekt durch die Fingerspitze verursacht wird, und
wobei der Anwendungsprozessor so konfiguriert ist, dass er die Fingerabdruckinformationen zum Entsperren der elektronischen Vorrichtung authentifiziert.

2. Elektronische Vorrichtung nach Anspruch 1, wobei der Berührungssensor so konfiguriert ist, dass er den Anwendungsprozessor aufweckt, wenn die Eingabe durch das externe Objekt eine durch die Fingerspitze verursachte Eingabe ist.

3. Elektronische Vorrichtung nach Anspruch 1, wobei der Anwendungsprozessor so konfiguriert ist, dass er die elektronische Vorrichtung entsperrt, wenn die Fingerabdruckinformationen mit zuvor gespeicherten Informationen übereinstimmen.

4. Elektronische Vorrichtung nach Anspruch 1, wobei der Berührungssensor so konfiguriert ist, dass er bestimmt, dass die Eingabe durch das externe Objekt die durch die Fingerspitze verursachte Eingabe ist, wenn ein bestimmtes Berührungsereignis durch das externe Objekt in einem bestimmten Bereich des Touch-Panels erkannt wird, während sich der Prozessor im Energiesparzustand befindet.

5. Elektronische Vorrichtung nach Anspruch 1, wobei die Anzeigetreiberschaltung (740) mindestens einen Teil eines Anzeigetreiber-IC (DDI) (742) oder eines Hintergrundbeleuchtungs-(BL)-IC (741) enthält.

6. Elektronische Vorrichtung nach Anspruch 1, wobei mindestens ein Anteil des Teilbereichs der Anzeige den Fingerabdrucksensor überlappt.

7. Elektronische Vorrichtung nach Anspruch 1, wobei der Berührungssensor so konfiguriert ist, dass er die Anzeigetreiberschaltung so steuert, dass die Anzeige in einem normalen Energiemodus angetrieben wird, wenn die Eingabe durch das externe Objekt, die durch die Fingerspitze verursacht wird, erkannt wird, während die Anzeige in einem Energiesparmodus angetrieben wird.

8. Elektronische Vorrichtung nach Anspruch 1, ferner umfassend:
einen Power-Management-IC (PMIC) (670, 770), der so konfiguriert ist, dass er das Touch-Panel, den Berührungssensor, die Anzeige, die Anzeigetreiberschaltung, den Fingerabdrucksensor und den Anwendungsprozessor mit Strom versorgt,
wobei die Anzeigetreiberschaltung so konfiguriert ist, dass sie die Anzeige unter Verwendung von Strom antreibt, der vom PMIC geliefert wird, wenn die Eingabe durch das externe Objekt, die durch die Fingerspitze verursacht wird, erkannt wird, während die Anzeige unter Verwendung von Strom angetrieben wird, der von einer Power-Management-Schaltung in der Anzeigetreiberschaltung geliefert wird.

9. Elektronische Vorrichtung nach Anspruch 1, wobei die Anzeigetreiberschaltung so konfiguriert ist, dass sie einen auf die Anzeige anzuwendenden Gammawert ändert, wenn die Eingabe durch das externe Objekt, die durch die Fingerspitze verursacht wird, erkannt wird, während die Anzeige in einem Energiesparmodus angetrieben wird.

10. Elektronische Vorrichtung nach Anspruch 1, wobei die Anzeigetreiberschaltung so konfiguriert ist, dass sie eine Bildschirmausgabe entfernt, während sie in einem Energiesparmodus angetrieben wird, und die Anzeige antreibt, um das Licht zum Erkennen des Musters des externen Objekts auszusenden, wenn die Eingabe durch das externe Objekt, die durch die Fingerspitze verursacht wird, erkannt wird, während die Anzeige im Energiesparmodus angetrieben wird.

11. Elektronische Vorrichtung nach Anspruch 1, wobei die Anzeigetreiberschaltung Informationen darüber speichert, ob die Anzeigetreiberschaltung besetzt ist, einen Gammawert, der einem Energiesparmodus entspricht, einen Gammawert, der einem normalen Energiemodus entspricht, und mindestens einige von mit Antreibsequenzen für die Anzeige assoziierten Registern.

12. Elektronische Vorrichtung nach Anspruch 1, wobei der Anwendungsprozessor durch den Touch-IC (620, 720) elektrisch mit der Anzeigetreiberschaltung verbunden ist.

13. Elektronische Vorrichtung nach Anspruch 1, wobei die Anzeigetreiberschaltung so konfiguriert ist, dass sie ein Signal, das einen Besetztzustand darstellt, an den Anwendungsprozessor sendet, wenn eine weitere Anforderung vom Anwendungsprozessor empfangen wird, während eine vom Touch-IC angeforderte Operation ausgeführt wird.

14. Verfahren (1210) zur Erkennung eines Fingerabdrucks in einer elektronischen Vorrichtung (600, 700), die einen Berührungssensor (610, 710), eine Anzeige (630, 730), einen Fingerabdrucksensor (650, 750), einen Touch-IC (620, 720) und einen Anwendungsprozessor (660, 760) enthält, umfassend:
Erkennen (1120), durch den Berührungssensor, einer Eingabe durch ein externes Objekt in Bezug auf einen Teilbereich der Anzeige, während sich der Anwendungsprozessor in einem Energiesparzustand befindet;
Aktivieren, durch den Touch-IC (620, 720), des Teilbereichs der Anzeige, während sich der Prozessor im Energiesparzustand befindet;
Erkennen (1140), durch den Touch-IC (620, 720), eines auf dem externen Objekt gezeichneten Musters unter Verwendung des Fingerabdrucksensors (650, 750), während sich der Anwendungsprozessor im Energiesparzustand befindet;
Bestimmen (1230) durch den Touch-IC (620, 720), ob die Eingabe in Bezug auf den Teilbereich durch eine Fingerspitze verursacht wird, indem das Muster des externen Objekts mit einem zuvor gespeicherten Muster verglichen wird, während sich der Anwendungsprozessor im Energiesparzustand befindet;
Verwerfen, durch den Touch-IC (620, 720), der Eingabe ohne Authentifizierung, wenn die Eingabe durch das externe Objekt nicht durch die Fingerspitze verursacht wird, sodass der Anwendungsprozessor in einem Energiesparzustand bleibt; und
Ermöglichen, dass der Fingerabdrucksensor durch den Touch-IC (620, 720) Fingerabdruckinformationen der Eingabe erhält, wenn die Eingabe durch das externe Objekt durch die Fingerspitze verursacht wird, wobei der Fingerabdrucksensor Fingerabdruckinformationen der Eingabe unter Verwendung von Lichtausgabe aus dem Teilbereich der Anzeige erhält und die Fingerabdruckinformationen dem Anwendungsprozessor bereitstellt, wenn die Eingabe durch das externe Objekt durch die Fingerspitze verursacht wird, und
wobei der Anwendungsprozessor die Fingerabdruckinformationen zum Entsperren der elektronischen Vorrichtung authentifiziert.

## Revendications

1. Dispositif électronique (600, 700) comprenant :
un dispositif d'affichage (630, 730) comprenant un écran tactile (610, 710) ;
un capteur d'empreinte digitale (650, 750) configuré pour détecter une entrée d'empreinte digitale par l'intermédiaire d'une zone partielle du dispositif d'affichage ;
un circuit de pilotage (640, 740) de dispositif d'affichage connecté électriquement au dispositif d'affichage pour piloter le dispositif d'affichage ;
un processeur d'application (660, 760) ;
un capteur tactile (610, 710) configuré pour détecter un signal associé à un toucher ; et
un CI tactile (620, 720) configuré pour :
commander le capteur tactile pour détecter une entrée par un objet externe par rapport à la zone partielle du dispositif d'affichage tandis que le processeur d'application est dans un état de faible consommation ;
activer la zone partielle du dispositif d'affichage pendant le processeur d'application est dans l'état de faible consommation ;
détecter un motif dessiné sur l'objet externe à l'aide du capteur d'empreinte digitale (650, 750) pendant que le processeur d'application est dans l'état de faible consommation ;
déterminer si l'entrée par rapport à la zone partielle est causée par le bout d'un doigt en comparant le motif de l'objet externe avec un motif précédemment stocké pendant que le processeur d'application est dans l'état de faible consommation ;
rejeter l'entrée sans authentification lorsque l'entrée par l'objet externe n'est pas causée par le bout du doigt de sorte que le processeur d'application reste dans l'état de faible consommation ; et
permettre au capteur d'empreinte digitale d'obtenir des informations d'empreinte digitale de l'entrée, lorsque l'entrée par l'objet externe est causée par le bout du doigt,
ledit capteur d'empreinte digitale étant configuré pour obtenir des informations d'empreinte digitale de l'entrée à l'aide de la lumière émise en sortie par la zone partielle du dispositif d'affichage et fournir les informations d'empreinte digitale au processeur d'application, lorsque l'entrée par l'objet externe est causée par le bout du doigt, et
ledit processeur d'application étant configuré pour authentifier les informations d'empreinte digitale en vue du déverrouillage du dispositif électronique.

2. Dispositif électronique selon la revendication 1, ledit capteur tactile étant configuré pour réveiller le processeur d'application lorsque l'entrée par l'objet externe est une entrée causée par le bout du doigt.

3. Dispositif électronique selon la revendication 1, ledit processeur d'application étant configuré pour déverrouiller le dispositif électronique lorsque les informations d'empreinte digitale correspondent aux informations précédemment stockées.

4. Dispositif électronique selon la revendication 1, ledit capteur tactile étant configuré pour déterminer que l'entrée par l'objet externe est l'entrée causée par le bout du doigt lorsqu'un événement tactile spécifié par l'objet externe est détecté dans une zone spécifiée de l'écran tactile pendant que le processeur est dans l'état de faible consommation.

5. Dispositif électronique selon la revendication 1, ledit circuit de pilotage (740) de dispositif d'affichage comprenant au moins une partie d'un CI de pilotage (742) de dispositif d'affichage (DDI) ou d'un CI de rétroéclairage (BL) (741).

6. Dispositif électronique selon la revendication 1, au moins une partie de la zone partielle du dispositif d'affichage chevauchant le capteur d'empreinte digitale.

7. Dispositif électronique selon la revendication 1, ledit capteur tactile étant configuré pour commander le circuit de pilotage de dispositif d'affichage de sorte que le dispositif d'affichage soit piloté dans un mode de consommation normal lorsque l'entrée par l'objet externe causée par le bout du doigt est détectée pendant que le dispositif d'affichage est piloté dans un mode de faible consommation.

8. Dispositif électronique selon la revendication 1, comprenant en outre :
un CI de gestion de puissance (PMIC) (670, 770) configuré pour fournir une puissance à l'écran tactile, au capteur tactile, au dispositif d'affichage, au circuit de pilotage de dispositif d'affichage, au capteur d'empreinte digitale et au processeur d'application,
ledit circuit de pilotage de dispositif d'affichage étant configuré pour piloter le dispositif d'affichage à l'aide d'une puissance fournie par le PMIC lorsque l'entrée par l'objet externe causée par le bout du doigt est détectée pendant que le dispositif d'affichage est piloté à l'aide de la puissance fournie par un circuit de gestion de puissance dans le circuit de pilotage de dispositif d'affichage.

9. Dispositif électronique selon la revendication 1, ledit circuit de pilotage de dispositif d'affichage étant configuré pour modifier une valeur gamma à appliquer au dispositif d'affichage lorsque l'entrée par l'objet externe causée par le bout du doigt est détectée pendant que le dispositif d'affichage est piloté dans un mode de faible consommation.

10. Dispositif électronique selon la revendication 1, ledit circuit de pilotage de dispositif d'affichage étant configuré pour supprimer une sortie d'écran tout en étant piloté dans un mode de faible consommation et piloter le dispositif d'affichage pour qu'il émette la lumière en vue de la détection du motif de l'objet externe lorsque l'entrée par l'objet externe causée par le bout du doigt est détectée pendant que le dispositif d'affichage est piloté dans le mode de faible consommation.

11. Dispositif électronique selon la revendication 1, ledit circuit de pilotage de dispositif d'affichage stockant des informations indiquant si le circuit de pilotage de dispositif d'affichage est occupé, une valeur gamma correspondant à un mode de faible consommation, une valeur gamma correspondant à un mode de consommation normale, et au moins certains des registres associés avec des séquences de pilotage pour le dispositif d'affichage.

12. Dispositif électronique selon la revendication 1, ledit processeur d'application étant connecté électriquement au circuit de pilotage de dispositif d'affichage par l'intermédiaire du CI tactile (620, 720).

13. Dispositif électronique selon la revendication 1, ledit circuit de pilotage de dispositif d'affichage étant configuré pour transmettre un signal représentant un état occupé au processeur d'application lorsqu'une autre demande est reçue en provenance du processeur d'application pendant qu'une opération demandée par le CI tactile est réalisée.

14. Procédé (1210) permettant de reconnaître une empreinte digitale dans un dispositif électronique (600, 700) comprenant un capteur tactile (610, 710), un dispositif d'affichage (630, 730), un capteur d'empreinte digitale (650, 750), un CI tactile (620, 720) et un processeur d'application (660, 760), comprenant :
la détection (1120), par le capteur tactile, d'une entrée par un objet externe par rapport à une zone partielle du dispositif d'affichage pendant que le processeur d'application est dans un état de faible consommation ;
l'activation, par le CI tactile (620, 720), la zone partielle du dispositif d'affichage pendant que le processeur est dans l'état de faible consommation ;
la détection (1140), par le CI tactile (620, 720), d'un motif dessiné sur l'objet externe à l'aide du capteur d'empreinte digitale (650, 750) pendant que le processeur d'application est dans l'état de faible consommation ;
la détermination (1230), par le CI tactile (620, 720), si l'entrée par rapport à la zone partielle est causée par un bout d'un doigt en comparant le motif de l'objet externe avec un motif précédemment stocké, pendant que le processeur d'application est dans l'état de faible consommation ;
le rejet, par le CI tactile (620, 720), de l'entrée sans authentification lorsque l'entrée par l'objet externe n'est pas causée par le bout du doigt de sorte que le processeur d'application reste dans un état de faible consommation ; et
la permission, grâce au CI tactile (620, 720), au capteur d'empreinte digitale d'obtenir des informations d'empreinte digitale de l'entrée lorsque l'entrée par l'objet externe est causée par le bout du doigt, ledit capteur d'empreinte digitale obtenant des informations d'empreinte digitale de l'entrée à l'aide de la lumière émise en sortie par le zone partielle du dispositif d'affichage et de fournir les informations d'empreinte digitale au processeur d'application, lorsque l'entrée par l'objet externe est causée par le bout du doigt, et
ledit processeur d'application authentifiant les informations d'empreinte digitale pour déverrouiller le dispositif électronique.
